# EUROPÄISCHE PATENTSCHRIFT

(11) **EP 0 657 365 B1**
(45) Veröffentlichungstag und Bekanntmachung des Hinweises auf die Patenterteilung: **04.02.1998**
(21) Anmeldenummer: 94118548.0
(22) Anmeldetag: 25.11.1994
(51) Int. Cl.: B65D 77/06

(54) **Behälter für den Transport und die Lagerung von Flüssigkeiten**
Container for transport and storing of liquids
Récipient pour le transport et le stockage de liquides

(30) Priorität: 06.12.1993 DE 4341539
(43) Veröffentlichungstag der Anmeldung: 14.06.1995
(73) Patentinhaber: PROTECHNA S.A., 1701 Fribourg (CH)
(72) Erfinder: Schütz, Udo, D-56242 Selters (DE)
(74) Vertreter: Pürckhauer, Rolf, Dipl.-Ing.

(56) Entgegenhaltungen:
- EP-A- 0 509 228
- DE-A- 4 206 945
- FR-A- 1 490 718

## Beschreibung

Die Erfindung betrifft Behälter für den Transport und die Lagerung von Flüssigkeiten, mit einem als Blasformteil gefertigten Innenbehälter aus Kunststoff, der eine verschließbare Befüllöffnung und eine Entnahme- und Spülöffnung zum Anschluß einer Entnahmearmatur sowie einen Ablaufboden aufweist und in einer flachen, dem Ablaufboden des Innenbehälters angepaßten Bodenwanne aus Blech oder Kunststoff auf einer Palette steht, sowie mit einem an dem Innenbehälter anliegenden Blechmantel, wobei die Bodenwanne als Palette ausgebildet ist und rillenartige Versteifungssicken aufweist, deren Gründe in einer gemeinsamen horizontalen Ebene liegen und die in der Bodenwanne nach unten offene oder geschlossene Kammern bilden, die Bodenwanne einen nach unten gezogenen, äußeren Stützrand aufweist, der einen hohlen Stützkragen bildet, und auf einem Palettenrahmen aus Metall, Holz oder Kunststoff befestigt ist.

Bei aus der EP-A-0 509 228 bekannten Palettenbehältern dieser Art sind die gewölbten Abschnitte des Bodenbereichs zwischen den senkrechten Seitenwänden und dem waagerechten Boden des Kunststoff-Innenbehälters durch die Bodenwanne der Palette im unteren Bereich abgestützt, während die an die senkrechten Seitenwände des Innenbehälters anschließenden Abschnitte des gewölbten Bodenbereichs von außen nicht abgestützt sind.

Bei diesen Palettenbehältern besteht die Gefahr, daß aufgrund von Rißbildungen im Bodenbereich des Innenbehälters, hervorgerufen durch dynamische Innendruckbelastungen aufgrund von beim Transport auftretenden Schwallschwingungen des flüssigen Transportgutes, Leckflüssigkeit aus dem Innenbehälter austritt.

Der Erfindung liegt die Aufgabe zugrunde, die Transportsicherheit des gattungsgemäßen Transport- und Lagerbehälters für Flüssigkeiten im Hinblick auf eine Zulassung desselben für Flüssigkeiten höherer Gefahrenklassen zu verbessern.

Diese Aufgabe wird erfindungsgemäß gelöst durch einen Behälter mit den Merkmalen des Patentanspruches 1.

Die Unteransprüche sind auf eine vorteilhafte und zweckmäßige Weiterbildung der Erfindung gerichtet.

Der erfindungsgemäße Mehrwegbehälter, der aus einem Kunststoff-Innenbehälter mit einem Blechmantel besteht, zeichnet sich aufgrund der Ausstattung mit einer flachen, den Innenbehälter aufnehmenden, als Palette ausgebildeten Bodenwanne, die dem Ablaufboden des Innenbehälters angepaßt ist und einen Hohlkammerboden sowie einen umlaufenden, äußeren hohlen Stützkragen mit einem guten Dämpfungsvermögen und einer hohen Steifigkeit sowohl bei einer Schwingungs- als auch bei Stoß- und Schlagbeanspruchung besitzt, und durch die Ausrüstung mit einem Blechmantel, der zusammen mit der Bodenwanne den besonders gefährdeten Bodenbereich des Innenbehälters abstützt, durch eine hohe Transport- und Unfallsicherheit aus. Aufgrund der restlosen Entleerbarkeit eignet sich der Behälter besonders für einen Einsatz in der Lebensmittelindustrie. der stabile Blechmantel ermöglicht eine mehrfache Stapelbarkeit des Behälters.

Die Erfindung ist nachstehend anhand von Zeichnungen erläutert. Es zeigt
- Fig. 1: eine perspektivische Darstellung eines Behälters mit einem Schutzdeckel,
- Fig. 2: eine perspektivische Darstellung eines Behälters mit einem Schutz- und Versteifungsrahmen,

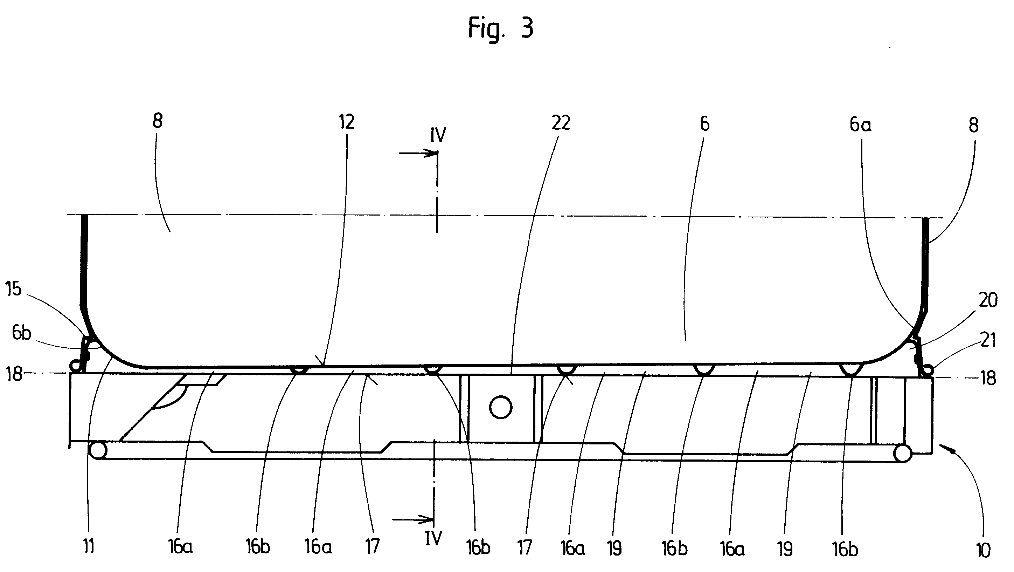

- Fig. 3: einen Längsschnitt und

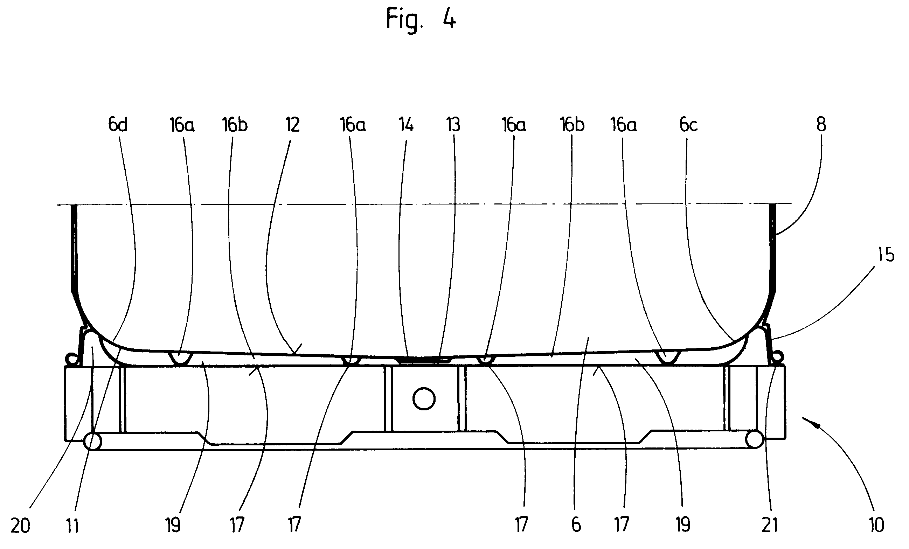

- Fig. 4: einen Querschnitt durch den Bodenbereich des Behälters nach Linie IV-IV der Fig. 3 in vergrößerter Darstellung,
- Fig. 5: die Befestigung des Blechmantels des Behälters an der Bodenwanne einer Palette,
- Fig. 6: die Befestigung eines Schutzmantels und
- Fig. 7: die Anbringung eines Schutzrahmens am oberen Rand des Blechmantels des Kunststoff-Innenbehälters,
- Fig. 8: den Auslaufbereich des Behälters im Schnitt und
- Fig. 9 und Fig.10: zwei Falzverbindungen der stoßenden Kanten des Blechmantels des Behälters.

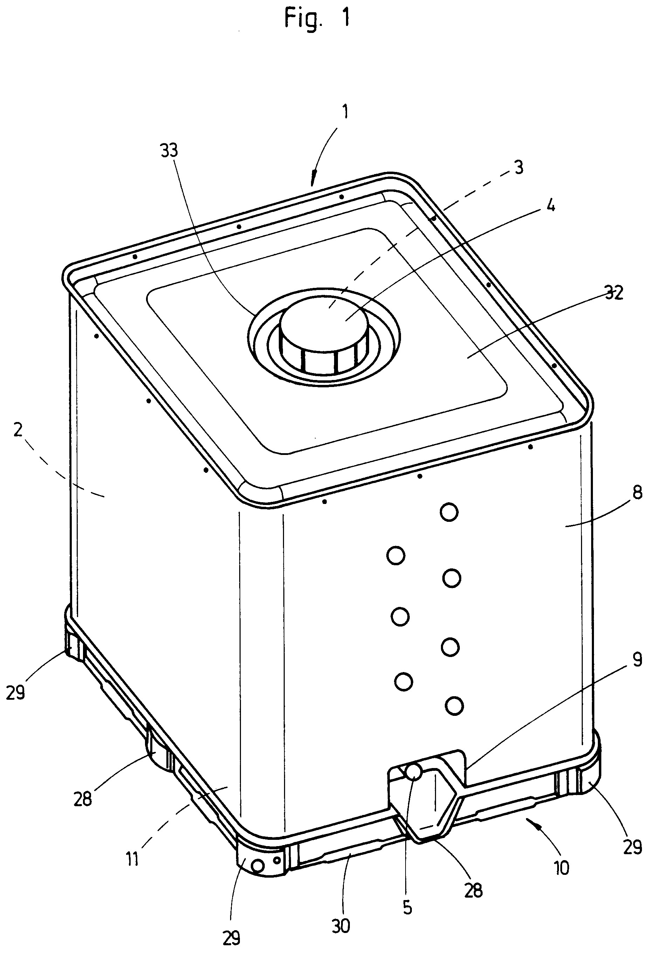

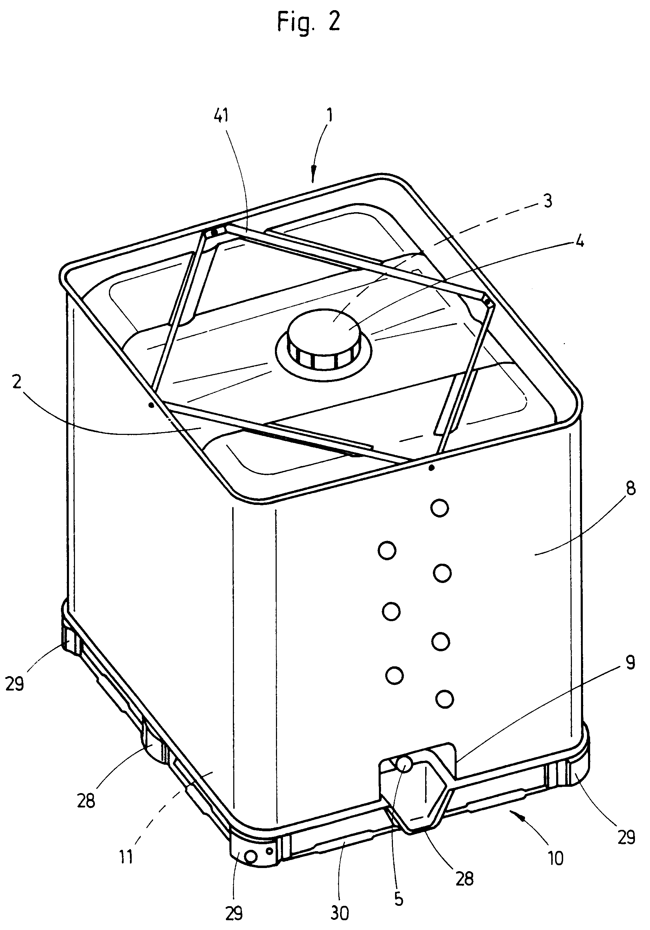

Der als Ein- und Mehrwegbehälter einsetzbare Behälter 1 nach den Fign. 1 und 2 für den Transport und die Lagerung von Flüssigkeiten weist als Hauptbauteile einen als Blasformteil gefertigten Innenbehälter 2 aus Kunststoff, z.B. Polyethylen, mit rechteckigem Grundriß und abgerundeten Ecken, der mit einem durch einen Schraubdeckel 4 verschließbaren Einfüllstutzen 3 und einem an einen Auslaufstutzen 5 im Bodenbereich 6 angeschlossenen Entnahmehahn 7 ausgestattet ist, einen Mantel 8 aus verzinktem Blech mit einer Bedienungsöffnung 9 für den Entnahmehahn 7 sowie eine als flache Bodenwanne 11 aus Blech ausgebildete Palette 10 mit euronormgerechten Längen- und Breitenabmessungen zur formschlüssigen Aufnahme des Kunststoff-Innenbehälters 2 auf.

Der Bodenbereich 6 des Innenbehälters 2 bildet einen Ablaufboden 12, der mit einem leichten Gefälle von dem rückwärtigen Rand 6a zum vorderen Rand 6b des Bodenbereichs 6 verläuft und der außerdem von den beiden Seitenrändern 6c, 6d des Bodenbereichs 6 leicht zur Bodenmitte hin abfällt. Auf diese Weise bildet der Ablaufboden 12 des Innenbehälters 2 eine flache, zu dem Auslaufstutzen 5 im vorderen Rand 6b des Bodenbereichs 6 des Behälters 2 leicht geneigte Ablaufrinne 13.

Die in der Neigung dem Ablaufboden 12 des Innenbehälters 2 angepaßte, aus Blechmaterial tiefgezogene Bodenwanne 11 der Palette 10 mit einer der Ablaufrinne 13 des Behälters 2 entsprechenden flachen Mittelrinne 14 weist einen nach unten gezogenen äußeren Stützrand 15 und in Richtung der und quer zur Mittelrinne 14 verlaufende Versteifungssicken 16a, 16b auf, deren Gründe 17 in einer gemeinsamen Ebene 18 - 18 liegen. Durch die Versteifungssicken 16a, 16b und die Mittelrinne 14 werden in der Bodenwanne 11 nach unten offene Kammern 19 gebildet, und der äußere Stützrand 15 formt an der Bodenwanne 11 einen umlaufenden, hohlen Stützkragen 20. Die derart gestaltete Bodenwanne 11 der Palette 10 zeichnet sich durch ein gutes Dämpfungsvermögen und eine hohe Steifigkeit sowohl bei einer Schwingungsbeanspruchung durch vom Transportfahrzeug übertragene Fahrschwingungen und von dem flüssigen Transportgut ausgehende Schwallschwingungen als auch bei einer äußeren Schlag- oder Stoßbeanspruchung aus, so daß der Behälter 1 den hohen Anforderungen hinsichtlich der vorgeschriebenen Transport- und Unfallsicherheit in vollem Umfang entspricht.

Von dem äußeren Stützrand 15 der Bodenwanne 11 ist ein umlaufender äußerer Randstreifen 21 abgewinkelt, der mit einer unter der Bodenwanne 11 mittig befestigten Versteifungsstrebe 22 einen Unterrahmen bildet.

Der Blechmantel 8 besitzt im unteren Bereich eine umlaufende Einziehung 23 zur Abstützung des Bodenbereichs 6 des Innenbehälters 2 zusammen mit der Bodenwanne 11 der Palette 10.

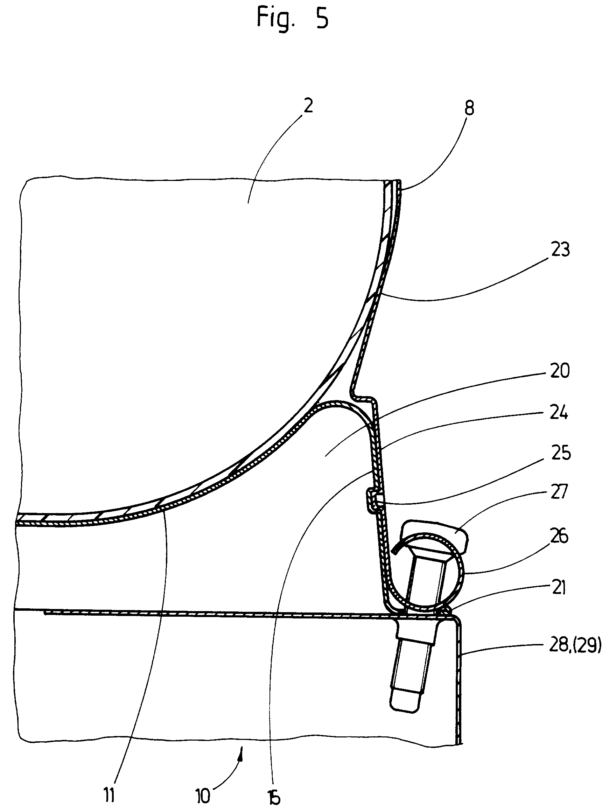

Anschließend an die Einziehung 23 weist der Blechmantel 8 einen unteren Abstützrand 24 auf, der mit dem Stützrand 15 der Bodenwanne 11 vernietet, verschweißt oder an dem Stützrand 15 mit nietartigen Quetschverbindungen 25 befestigt ist (Fig. 5).

Der untere Abstützrand 24 des Blechmantels 8 läuft in einen nach außen umgerollten Rand 26 aus, der auf dem umlaufenden Randstreifen 21 des Stützrandes 15 der Bodenwanne 11 aufliegt.

Die Bodenwanne 11 ist mit selbstschneidenden Blechschrauben 27 mit den Mittel- 28 und Eckfüßen 29 des als Stahlrohrrahmen ausgebildeten Fußrahmens 30 der Palette 10 verschraubt.

Der obere Rand 31 des Blechmantels 8 des Behälters 1 ist als Abstützrand für die Palette 10 eines aufgestapelten Behälters profiliert.

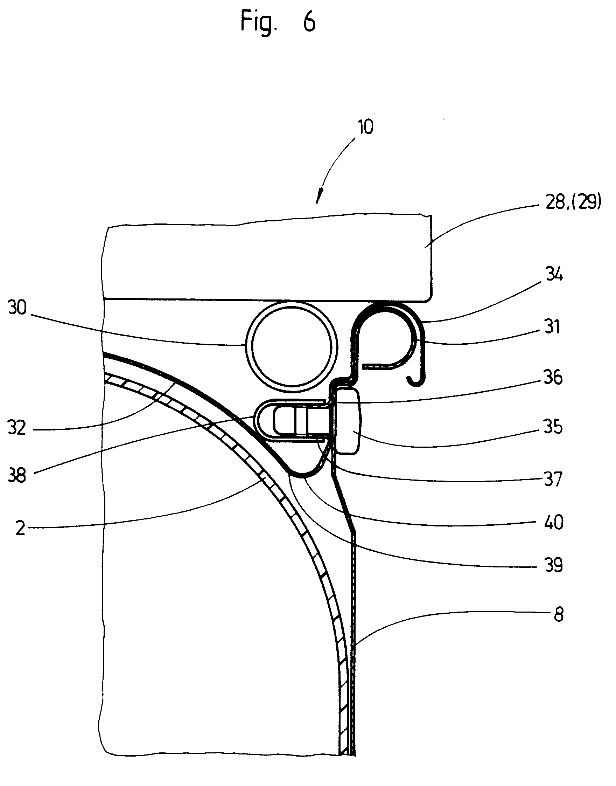

Der Behälter 1 nach Fig. 1 ist mit einem abnehmbaren Schutzdeckel 32 aus Blech mit einer Zugangsöffnung 33 zum Einfüllstutzen 3 des Innenbehälters 2 verschlossen. Der profilierte Rand 34 des Schutzdeckels 32 liegt auf dem oberen Rand 31 des Blechmantels 8 auf und ist an diesem mit selbstschneidenden Blechschrauben 35 befestigt, die durch Löcher 36 im Blechmantelrand 31 in aus dem Schutzdeckelrand 34 nach innen ausgeformte Hülsen 37 eingeschraubt sind. Auf die Blechschrauben 35 sind Schutzkappen 38 aus Kunststoff oder dgl. Material aufgesetzt. Der leicht gewölbte Schutzdeckel 32 bildet einen umlaufenden äußeren Ablaufkanal 39 mit Wasserablauflöchern 40 (Fig. 6).

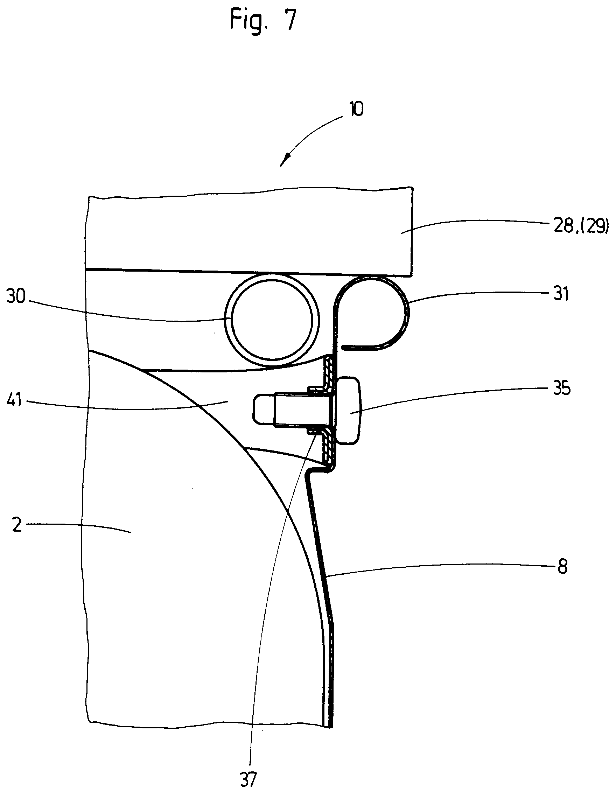

Der Behälter 1 nach Fig. 2 ist mit einem Schutz- und Versteifungsrahmen 41 ausgestattet, der mit dem oberen Rand 31 des Blechmantels 8 verschraubt ist (Fig. 7).

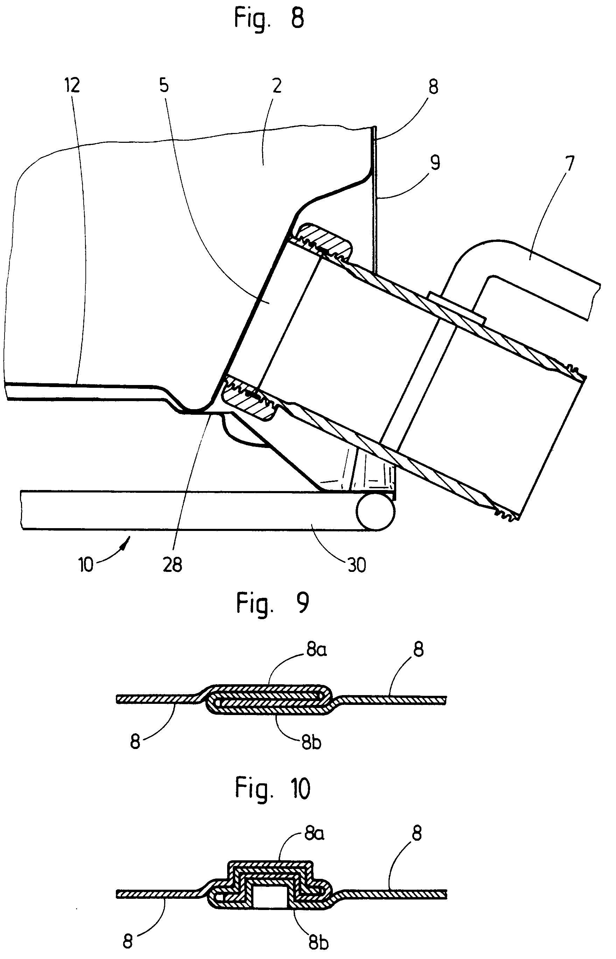

Die stoßenden Kanten 8a, 8b des aus einem Blech hergestellten Mantels 8 sind jeweils als Doppelfalz ausgebildet, miteinander verhakt und verschweißt (Fig. 9) oder durch nietartige Quetschverbindungen 25 miteinander verbunden (Fig. 10).

## Patentansprüche

1. Behälter für den Transport und die Lagerung von Flüssigkeiten, mit einem als Blasformteil gefertigten Innenbehälter (2) aus Kunststoff, der eine verschließbare Befüllöffnung und eine Entnahme- und Spülöffnung zum Anschluß einer Entnahmearmatur (7) sowie einen Ablaufboden (12) aufweist und in einer flachen, dem Ablaufboden (12) des Innenbehälters (2) angepaßten Bodenwanne (11) aus Blech oder Kunststoff auf einer Palette (10) steht, sowie mit einem an dem Innenbehälter (2) anliegenden Blechmantel (8), wobei die Bodenwanne (11) als Palette (10) ausgebildet ist und rillenartige Versteifungssicken (16a, 16b) aufweist, deren Gründe (17) in einer gemeinsamen horizontalen Ebene (18-18) liegen und die in der Bodenwanne (11) nach unten offene oder geschlossene Kammern (19) bilden, die Bodenwanne (11) einen nach unten gezogenen, äußeren Stützrand (15) aufweist, der einen hohlen Stützkragen (20) bildet, und auf einem Palettenrahmen (30) aus Metall, Holz oder Kunststoff befestigt ist, dadurch gekennzeichnet, daß der Blechmantel (8) im unteren Bereich eine unlaufende Einziehung (23) zur Abstützung des gewölbten Abschnitts des Bodenbereiches (6) des Innenbehälters (2) zwischen denen senkrechten Seitenwänden und dessen flachen Boden zusammen mit dem hohlen Stützkragen der Bodenwanne (11) der Palette (10) besitzt und anschließend an die Einziehung (23) einen unteren Abstützrand (24) aufweist, der auf der Palette aufsitzt und mit der Bodenwanne (11) und/oder dem Fußrahmen (30) der Palette (10) vernietet und/oder verschraubt ist.

2. Behälter nach Anspruch 1, dadurch gekennzeichnet, daß der obere Rand (31) des Blechmantels (8) als Abstützrand für die Palette (10) eines aufgestapelten Behälters (1) profiliert ist.

3. Behälter nach einem der Ansprüche 1 bis 2, gekennzeichnet durch einen abnehmbaren Schutzdeckel (32) aus Blech, der eine Zugangsöffnung (33) zum Einfüllstutzen (3) des Innenbehälters (2) aufweist und mit dem oberen Rand (31) des Blechmantels (8) verschraubt oder vernietet ist.

4. Behälter nach einem der Ansprüche 1 bis 2, gekennzeichnet durch einen abnehmbaren Schutz- und Versteifungsrahmen (41), der mit dem oberen Rand (31) des Blechmantels (8) verschraubt ist.

5. Behälter nach einem der Ansprüche 1 bis 4, dadurch gekennzeichnet, daß der Ablaufboden (12) des Innenbehälters (2) mit einem leichten Gefälle von dem rückwärtigen Rand (6a) zum vorderen Rand (6b) des Bodenbereichs (6) verläuft, an dem ein Stutzen (5) zum Anschluß eines Entnahme- und Spülhahns (7) angeordnet ist.

6. Behälter nach Anspruch 5, dadurch gekennzeichnet, daß der Ablaufboden (12) des Innenbehälters (2) ein Gefälle von den beiden Seitenrändern (6c, 6d) des Bodenbereichs (6) zur Bodenmitte hin aufweist und eine mittige, flache Ablaufrinne (13) bildet.

## Claims

1. Container for transporting and storing liquids, with a plastic inner container (2) manufactured as a blow-moulded part, which has a lockable filling aperture and a discharge and washing aperture to be connected to a discharge valve (7), has a discharge base (12), and stands in a flat base trough (11), made of sheet steel or plastic and adapted to the discharge base (12) of the inner container, on a pallet (10), and with a steel casing (8) adjacent to the inner container (2), the base trough (11) being configured as a pallet (10) and having groove-like reinforcing beads (16a, 16b), the bases (17) of which lie in a common horizontal plane (18-18) and which form chambers (19) in the base trough (11) which are open or closed downwards, the base trough (11) having an outer supporting edge (15) drawn downwards and which forms a hollow support collar (20), and being fastened to a pallet frame (30) made of metal, wood or plastic, **characterised in that** the steel casing (8) has a circumferential constriction (23) to support the arched section of the base region (6) of the inner container (2) between its perpendicular side walls and its flat base, together with the hollow support collar of the base trough (11) of the pallet (10), and has a lower supporting edge (24) joining on to the constriction (23), which edge sits on the pallet and is riveted and/or screwed to the base trough (11) and/or the base frame (30) of the pallet (10).

2. Container according to claim 1, **characterised in that** the upper edge (31) of the steel casing (8) is profiled as a supporting edge for the pallet (10) of a stacked container (1).

3. Container according to one of claims 1 to 2, **characterised by** a removable protective cover (32) made of sheet steel which has an access aperture (33) to the filler neck (3) of the inner container (2) and is screwed or riveted to the upper edge (31) of the steel casing (8).

4. Container according to one of claims 1 to 2, **characterised by** a removable protective and stiffening frame (41) which is screwed to the upper edge (31) of the steel casing (8).

5. Container according to one of claims 1 to 4, **characterised in that** the discharge base (12) of the inner container (2) runs with a slight incline from the rearward edge (6a) to the front edge (6b) of the base region (6), on which a connection piece (5) is arranged to be connected to a discharge and washing tap (7).

6. Container according to claim 5, **characterised in that** the discharge base (12) of the inner container (2) has an incline from the two side edges (6c, 6d) of the base region (6) towards the centre of the base and forms a central flat discharge channel (13).

## Revendications

1. Récipient pour le transport et le stockage de liquides, comportant un récipient (2) intérieur en matière plastique fabriqué par soufflage qui présente une ouverture de remplissage pouvant être obturée, une ouverture de soutirage et de rinçage destinée à être raccordée à une tuyauterie (7) de soutirage ainsi qu'un fond (12) d'écoulement et qui repose sur une palette (10) dans une cuve (11) de fond plate en tôle ou en matière plastique adaptée au fond (12) d'écoulement du récipient (2) intérieur, et comportant une enveloppe (8) en tôle appliquée sur le récipient (2) intérieur, la cuve (11) de fond étant réalisée sous forme de palette (10) et présentant des moulures (16a, 16b) de renforcement en forme de cannelures dont les fonds (17) se trouvent dans un plan (18-18) horizontal commun et qui forment dans la cuve (11) de fond des chambres (19) ouvertes vers le bas ou fermées, la cuve (11) de fond présentant un bord (15) d'appui extérieur allant vers le bas qui forme une collerette (20) d'appui creuse et étant fixée sur un cadre (30) de palette en métal, en bois ou en matière plastique, caractérisé en ce que l'enveloppe (8) en tôle possède dans la zone inférieure une rétreinte (23) faisant le tour pour l'appui de la partie bombée de la zone (6) de fond du récipient (2) intérieur entre les parois latérales verticales et le fond plat de celui-ci conjointement avec la collerette d'appui creuse de la cuve (11) de fond de la palette (10) et présente à la suite de la rétreinte (23) un bord (24) d'appui inférieur qui repose sur la palette et qui est rivé et/ou vissé avec la cuve (11) de fond et/ou le cadre (30) inférieur de la palette (10).

2. Récipient selon la revendication 1, caractérisé en ce que le bord (31) supérieur de l'enveloppe (8) en tôle est profilé sous forme de bord d'appui pour la palette (10) d'un récipient (1) empilé.

3. Récipient selon l'une des revendications 1 à 2, caractérisé par un couvercle (32) de protection amovible en tôle qui présente une ouverture (33) d'accès à une tubulure (3) de remplissage du récipient (2) intérieur et est vissé ou rivé avec le bord (31) supérieur de l'enveloppe (8) en tôle.

4. Récipient selon l'une des revendications 1 à 2, caractérisé par un cadre (41) de protection et de renforcement amovible qui est vissé avec le bord (31) supérieur de l'enveloppe (8) en tôle.

5. Récipient selon l'une des revendications 1 à 4, caractérisé en ce que le fond (12) d'écoulement du récipient (2) intérieur s'étend avec une légère inclinaison du bord (6a) arrière au bord (6b) avant de la zone (6) de fond sur laquelle est disposée une tubulure (5) pour le raccordement d'un robinet (7) de soutirage et de rinçage.

6. Récipient selon la revendication 5, caractérisé en ce que le fond (12) d'écoulement du récipient (2) intérieur présente une inclinaison à partir des deux bords (6c, 6d) latéraux de la zone (6) de fond vers le milieu du fond et forme une rigole (13) d'écoulement centrale et plate.
